(19) Europäisches Patentamt
European Patent Office
Office européen des brevets

(11) **EP 0 848 985 B1**

(12) **EUROPÄISCHE PATENTSCHRIFT**

(45) Veröffentlichungstag und Bekanntmachung des Hinweises auf die Patenterteilung:
**25.02.2004 Patentblatt 2004/09**

(51) Int Cl.⁷: **B01D 53/94**

(21) Anmeldenummer: **97120798.0**

(22) Anmeldetag: **27.11.1997**

(54) **Verfahren und Vorrichtung zur Minderung von Stickoxiden in Gasgemischen**

Process and apparatus for reduction of nitrogen oxides in gaseous mixtures

Procédé et dispositif pour la reduction d'oxydes d'azote des mélanges gazeux

(84) Benannte Vertragsstaaten:
**CH DE FR GB IT LI**

(30) Priorität: **10.12.1996 DE 19651212**

(43) Veröffentlichungstag der Anmeldung:
**24.06.1998 Patentblatt 1998/26**

(73) Patentinhaber: **ROBERT BOSCH GMBH**
**70442 Stuttgart (DE)**

(72) Erfinder: **Stutzenberger, Heinz**
**71665 Vaihingen (DE)**

(56) Entgegenhaltungen:
**EP-A- 0 555 746**      **EP-A- 0 615 777**
**DE-A- 19 510 804**     **US-A- 4 585 631**

• **PATENT ABSTRACTS OF JAPAN vol. 015, no. 007 (C-0794), 9.Januar 1991 & JP 02 258017 A (BABCOCK HITACHI KK), 18.Oktober 1990,**

**Beschreibung**

Die Erfindung betrifft ein Verfahren und eine Vorrichtung zur Minderung von Stickoxiden in Gasgemischen, insbesondere in Abgasen von Verbrennungsmaschinen zur Anwendung in Kraftfahrzeugen nach der Gattung der unabhängigen Hauptansprüche.

Stand der Technik

Bei der nachmotorischen Minderung von Stickoxiden, insbesondere bei Dieselmotoren, tritt das Problem auf, daß der bei Ottomotoren bekannte geregelte oder ungeregelte Dreiwegekatalysator infolge des hohen Luft-, d.h. Sauerstoffüberschusses, nicht eingesetzt werden kann. In stationärer Anwendung bei der Entstickung beispielsweise von Abgasen bei Kraftwerken ist die selektive katalytische Reduktion von Stickoxiden mit Ammoniak an speziellen Kontakten ($NH_3$-SCR) bekannt. Dies kann, wenn auch eingeschränkt, dargelegt in der DE 44 17 238 A1, auch auf mobile Belange, beispielsweise in Kraftfahrzeugen angewendet werden. Dabei wird Ammoniak durch katalytische Hydrolyse einer wässrigen Harnstofflösung an speziellen heterogenen Katalysatoren gewonnen. Diese Harnstofflösung muß beispielsweise in einem Kraftfahrzeug in einem Tank mitgeführt werden und ist dadurch relativ platzaufwendig und gerade bei tiefen Temperaturen ungeeignet für den Dauerbetrieb.

Es ist weiterhin aus der DE 195 10 804 A 1 bekannt, den Anteil an Stickoxiden in Abgasen von Verbrennungsmaschinen mit Sauerstoffüberschuß zu vermindern, indem die Abgase unter Zuführung eines selektiv wirkenden Reduktionsmittels im Plasmazustand mit einem Katalysator in Kontakt gebracht werden, wobei das Reduktionsmittel vordem Kontakt am Katalysator in den Hochdruckplasmazustand unter überwiegender Radikalbildung überführt wird, so daß eine Beschleunigung der Kontaktreaktion erfolgt. In letzter Zeit hat sich weiterhin bei der Miniaturisierung von Lasern, insbesondere beispielsweise von Nd:YAG-Lasern oder Halbleiterlasern, dargestellt beispielsweise in dem Artikel von F.v. Alvensleben und K. Dickmann in: *Technische Rundschau* 1991, *37*, 68-72, ein bedeutender Fortschritt ergeben. Dabei werden diese miniaturisierten Laser zur Verdampfung von Metallen eingesetzt.

Aus der US 4,585,631 ist ein Verfahren bekannt, bei dem einem stickoxidhaltigen Gas Ammoniak beigemischt wird und diese Mischung in einer Reaktionskammer unter Einwirkung energiereicher Strahlung zur Reaktion gebracht wird. Die Verwendung von Ammoniak ist jedoch bei Kraftfahrzeuganwendungen aufgrund der Giftigkeit von Ammoniak unerwünscht.

Weiterhin ist der EP 615 777 A1 ein Verfahren zur katalytischen Stickoxidreduktion von sauerstoffhaltigen Gasen zu entnehmen, bei dem dem stickoxidhaltigen Gas Harnstoff in fester Form zudosiert wird. Die Dosierung von festem Harnstoff ist jedoch mit einem erhöhten technischen Aufwand verbunden.

Aus der JP 2258017 ist ein weiteres Verfahren zur Behandlung von stickoxidhaltigen Abgasen bekannt, das auf der Zugabe von dampfförmigem Harnstoff beruht. Die Dosierung von Harnstoffdampf stellt jedoch ebenfalls eine technische Herausforderung dar.

Aufgabe der vorstehenden Erfindung ist es, ein Verfahren und eine Vorrichtung zur Verfügung zu stellen, mit dem die Zufuhr eines Reduktionsmittels in ein stickoxidhaltiges Abgas auf einfache und zugleich effektive Weise ermöglicht wird.

Vorteile der Erfindung

Durch die Zuführung von dampfförmigem Harnstoff oder dampfförmigen Reaktionsprodukten des Harnstoffs durch ein Trägergas wird in vorteilhafter Weise erreicht, dass die thermodynamischen und kinetischen Probleme, die bei einer Reaktion an den Grenzflächen zweier Phasen zwischen einem wässrigen und einer dampfförmigen Reaktionspartner auftreten können, vermieden werden. Die Durchmischung zweier Gasgemische erfolgt thermodynamisch und kinetisch wesentlicher schneller und effizienter als zwischen zwei verschiedenen Phasen. Darüber hinaus wird so die Reaktivität erhöht. Es entfallen aufwendige Installationen zur Bevorratung und Einleitung von wässrigen Gemischen. Weiterhin ist ein Einsatz auch bei tiefen Temperaturen möglich, bei denen wässrige Lösungen von Verbindungen, die durch katalytische Hydrolysen Ammoniak freisetzen, gefrieren würden. Weiterhin ist es von Vorteil, wenn die Zufuhr des gasförmigen Reduktionsmittels durch ein Trägergas bewirkt wird, da dies die Dosierung des Reduktionsmittels wesentlich erleichtert.

Weitere vorteilhafte Ausgestaltungen und Weiterbildungen des erfindungsgemäßen Verfahrens und der Vorrichtung sind in den Unteransprüchen ausgeführt.

In bevorzugter Ausgestaltung erfolgt die Verdampfung des Harnstoffes mittels einer intensiven Lichtquelle, deren zeitabhängige Leistung gesteuert werden kann, so daß Harnstoff oder die Reaktionsprodukte des Harnstoffes in einfacher Weise dosiert werden können. Durch die Verwendung einer intensiven Lichtquelle werden kompliziertere Apparaturen vermieden, wie sie beispielsweise beim Überführen des Harnstoffes und dergleichen in den Plasmabereich vonnöten sind.

Ganz besonders bevorzugt wird als Trägergas Atmosphärenluft oder das Gasgemisch selbst genommen. Im letzteren Fall kann beispielsweise in Abgasen von Verbrennungsmotoren das Abgas durch eine entsprechende Zuleitung als Trägergas verwendet werden, was eine wesentliche Vereinfachung des Verfahrens darstellt.

In vorteilhafter Ausführung wird als intensive Lichtquelle ein Laser verwendet, der eine einfache Miniaturisierung erlaubt. Dadurch kann der Platzbedarf der Harnstoffquelle samt Laser so optimiert und minimiert werden, daß auch die Verwendung beispielsweise in Kleinwagen möglich ist.

Zeichnung

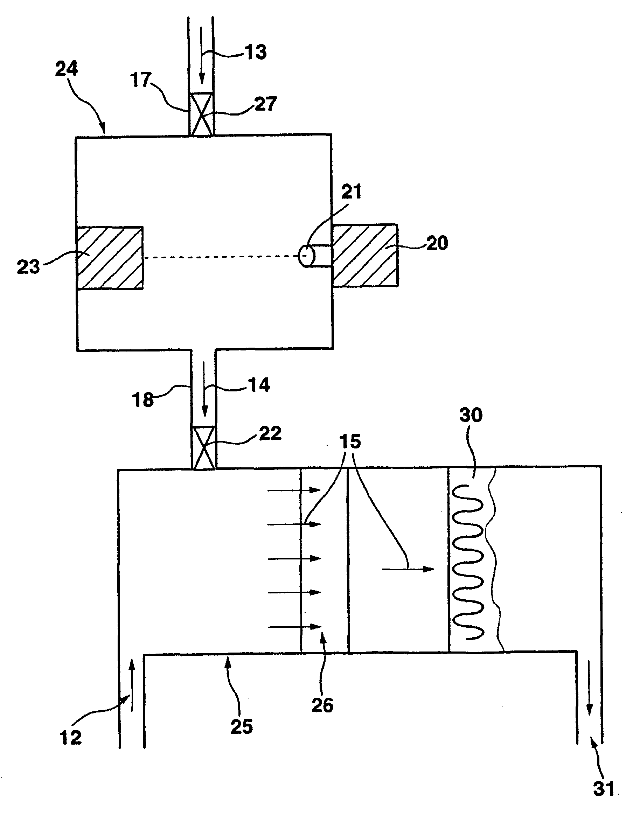

Die einzige Figur zeigt eine Vorrichtung zur Durchführung des erfindungsgemäßen Verfahrens.

Beschreibung des Ausführungsbeispiels

Die Figur zeigt den prinzipiellen Aufbau einer Vorrichtung zur Durchführung des erfindungsgemäßen Verfahrens. Das Gasgemisch wird über eine Zuführung, in der die Strömungsrichtung des Gasgemisches mit der Nummer 12 bezeichnet ist, einer Einlaufkammer 25 zugeführt. Diese Einlaufkammer 25 ist mit einer Einbringvorrichtung 22 mit einer weiteren Kammer 24 über deren Auslaß 18 verbunden. Diese Kammer 24 verfügt über einen Einlaß 17, der ebenfalls eine Einbringvorrichtung 27 für ein Gas besitzt. Die Strömungsrichtung des Gases durch die Kammer 24 ist mit dem Pfeil 13 und dem Pfeil 14 dargestellt. In der Kammer 24 befindet sich eine Halterung für eine Harnstoffquelle 23. Beispielsweise gegenüberliegend dazu ist auf der anderen Seite der Kammer 24 die Laseraustrittsöffnung 21 angeordnet, die mit dem Laser 20 verbunden ist. Der Laser 20 kann in oder außerhalb der Kammer 24 angeordnet sein. Es ist weiterhin denkbar, anstelle eines festen Blockes aus Harnstoff 23, andere Materialien wie beispielsweise Ammoniumcarbonat, Ammoniumcarbamat, Ammoniumhydrogencarbonat, Ammoniumformiat, Ammoniumoxalat, Ammoniumhydroxid, Bipyridyl, Cyanursäure, Harnstoff-Formaldehyd-Kondensate bzw. Reaktionsprodukte oder stabile Amine, wie beispielsweise Hexamethylentetraamin, sowie Mischungen dieser Verbindungen zu verwenden. Nachdem der Harnstoff 23 mittels des Lasers 20 zeitabhängig verdampft ist, kann über den Auslaß 18 und mittels der Einbringvorrichtung 22 das Trägergas-Harnstoffdampf-Gemisch in die Einlaufkammer 25 dem zu entstickenden Gasgemisch zugeführt werden. Die nun vereinigten Gasgemische treffen in Strömungsrichtung 15 auf einen Hydrolysekatalysator 26, bei dem durch eine heterogene katalytische Hydrolyse aus dem Harnstoff Ammoniak entsteht. Das dazu notwendige Wasser entstammt dem Abgas.

$$O=C(NH_2)_2 + H_2O \rightarrow CO_2 + 2NH_3$$

Das Gasgemisch, welches nunmehr aus Ammoniak, $CO_2$ und dem zu entstickenden Gasgemisch besteht, trifft nunmehr auf einen sogenannten DeNO$_x$-Katalysator 30, an dessen Oberfläche Ammoniak mit den Stickoxiden nach folgender Gleichung reagiert:

$$4\,NO + 4NH_3 + O_2 \rightarrow 6H_2O + 4N_2$$

Stickoxide werden so zu umweltunschädlichem Stickstoff und Wasser umgesetzt und das von Stickoxiden gereinigte Gasgemisch verläßt die Vorrichtung über den Auslaß 31.

**Patentansprüche**

1.  Verfahren zur Minderung von Stickoxiden in Gasgemischen, insbesondere im Abgas von Verbrennungsmotoren, bei dem Verbindungen, die durch katalytische Hydrolyse Ammoniak freisetzen, in das Gasgemisch eingeleitet werden, wobei die Verbindungen, die durch katalytische Hydrolyse Ammoniak freisetzen, in dampfförmigem Zustand dem Gasgemisch zugeführt werden, **dadurch gekennzeichnet, dass** dampfförmiger Harnstoff oder Reaktionsprodukte des Harnstoffs in dampfförmigen Zustand durch ein Trägergas dem Gasgemisch zugeführt werden.

2.  Verfahren nach Anspruch 1, **dadurch gekennzeichnet, daß** Harnstoff oder Reaktionsprodukte des Harnstoffes als Verbindung, die durch katalytische Hydrolyse Ammoniak freisetzt, verwendet werden.

3.  Verfahren nach Anspruch 1 und 2, **dadurch gekennzeichnet, daß** Harnstoff aus festem Zustand heraus verdampft wird.

4.  Verfahren nach Anspruch 3, **dadurch gekennzeichnet, daß** die Verdampfung mittels einer intensiven Lichtquelle erfolgt.

5.  Verfahren nach Anspruch 1 und 2, **dadurch gekennzeichnet, daß** der Harnstoff oder die Reaktionsprodukte des Harnstoffs in dampfförmigem Zustand dosiert werden.

6.  Verfahren nach Anspruch 5, **dadurch gekennzeichnet, daß** die Dosierung des dampfförmigen Harnstoffs oder von Reaktionsprodukten des Harnstoffs in dampfförmigen Zustand über die Steuerung der zeitabhängigen Leistung der intensiven Lichtquelle erfolgt.

7.  Verfahren nach Anspruch 1 und 2, **dadurch gekennzeichnet, daß** dampfförmiger Harnstoff oder Reaktionsprodukte des Harnstoffs in dampfförmigen Zustand durch ein Trägergas dem Gasgemisch zugeführt werden.

8.  Verfahren nach Anspruch 7, **dadurch gekennzeichnet, daß** das verwendete Trägergas Atmosphärenluft, oder das Gasgemisch selber, oder ein Teil des Gasgemisches ist.

9. Vorrichtung zur Minderung von Stickoxiden in Gasgemischen, mit mindestens einem zwischen einem Eintritt und einem Austritt des Gasgemisches in Strömungsrichtung angeordneten Katalysator (26, 30), welcher das Gasgemisch durch eine katalytische Reaktion in seiner chemischen Zusammensetzung verändert, und mit einer Einrichtung (24), mittels derer in Strömungsrichtung vor dem Katalysator in das Gasgemisch Verbindungen, die durch katalytische Hydrolyse Ammoniak freisetzen, eingeleitet werden, wobei die Einrichtung (24) über eine Quelle dieser Verbindungen verfügt, und wobei Mittel vorgesehen sind, mittels derer diese Verbindungen in eine dampfförmige Phase überführbar sind, derart, dass diese Verbindungen in dampfförmigem Zustand dem Gasgemisch zuführbar sind, **dadurch gekennzeichnet, dass** dampfförmiger Harnstoff oder Reaktionsprodukte des Harnstoffs in dampfförmigen Zustand durch ein Trägergas dem Gasgemisch zugeführt werden.

10. Vorrichtung nach Anspruch 9, **dadurch gekennzeichnet, daß** die Quelle für die Verbindungen, die durch katalytische Hydrolyse Ammoniak freisetzen, diese Verbindungen in festem Zustand enthält.

11. Vorrichtung nach Anspruch 9 oder 10, **dadurch gekennzeichnet, daß** das Mittel zum Überführen dieser Verbindungen in die dampfförmige Phase eine intensive Lichtquelle (20) mit einer Strahlaustrittsöffnung (21) ist, und daß die Strahlaustrittsöffnung (21) in einem Abstand zu der festen Quelle dieser Verbindungen angeordnet ist.

12. Vorrichtung nach Anspruch 11, **dadurch gekennzeichnet, daß** der Abstand zwischen der festen Quelle dieser Verbindungen und der Strahlaustrittsöffnung (21) einstellbar ist.

13. Vorrichtung nach Anspruch 11, **dadurch gekennzeichnet, daß** der Winkel zwischen der festen Quelle dieser Verbindungen und der Strahlungsaustrittsöffnung (21) einstellbar ist.

14. Vorrichtung nach Anspruch 11, **dadurch gekennzeichnet, daß** die Strahlaustrittsöffnung (21) im wesentlichen senkrecht zu der festen Quelle dieser Verbindungen angeordnet ist.

15. Vorrichtung nach Anspruch 11, **dadurch gekennzeichnet, daß** die intensive Lichtquelle (20) ein Laser ist.

16. Vorrichtung nach Anspruch 9, **dadurch gekennzeichnet, daß** die Einrichtung (24) eine Kammer mit einem Einlaß (17) und einem Auslaß (18) aufweist, daß über den Einlaß (17) ein Trägergas in die Kammer einleitbar ist, daß sich in der Kammer (24) mit dem dampfförmigen Verbindungen, die durch katalytische Hydrolyse Ammoniak freisetzen, vermischt, und daß das Gemisch aus Trägergas und den dampfförmigen Verbindungen über den Auslaß (18) dem Gasgemisch zuführbar ist.

17. Vorrichtung nach Anspruch 16, **dadurch gekennzeichnet, daß** im Einlaß (17) ein regelbares Ventil (27) zum Einbringen des Trägergases vorgesehen ist.

18. Vorrichtung nach Anspruch 16, **dadurch gekennzeichnet, daß** im Auslaß (18) ein weiteres regelbares Ventil (22) vorgesehen ist, mit dem die Zuführung der in dampfförmigem Zustand vorliegenden Verbindungen, die durch katalytische Hydrolyse Ammoniak freisetzen, in das Gasgemisch einstellbar ist.

**Claims**

1. Method for lowering the levels of nitrogen oxides in gas mixtures, in particular in the exhaust gas from internal combustion engines, in which compounds which release ammonia through catalytic hydrolysis are introduced into the gas mixture, the compounds which release ammonia through catalytic hydrolysis being fed to the gas mixture in the vapour state, **characterized in that** urea in vapour form or reaction products of urea in the vapour state are fed to the gas mixture by a carrier gas.

2. Method according to Claim 1, **characterized in that** urea or reaction products of urea are used as compound which releases ammonia through catalytic hydrolysis.

3. Method according to Claims 1 and 2, **characterized in that** urea is vaporized from the solid state.

4. Method according to Claim 3, **characterized in that** the vaporization is carried out by means of an intensive light source.

5. Method according to Claims 1 and 2, **characterized in that** the urea or the reaction products of urea are metered in the vapour state.

6. Method according to Claim 5, **characterized in that** the metering of the urea in vapour form or of reaction products of urea in the vapour state is effected by controlling the time-dependent output of the intensive light source.

7. Method according to Claims 1 and 2, **characterized in that** urea in vapour form or reaction products of urea in the vapour state are fed to the gas mixture

4

by a carrier gas.

8. Method according to Claim 7, **characterized in that** the carrier gas used is atmospheric air or the gas mixture itself or part of the gas mixture.

9. Apparatus for reducing the levels of nitrogen oxides in gas mixtures, having at least one catalytic converter (26, 30) which is arranged between an inlet and an outlet of the gas mixture in the direction of flow and changes the chemical composition of the gas mixture by means of a catalytic reaction, and having a device (24), by means of which compounds which release ammonia through catalytic hydrolysis are introduced into the gas mixture upstream of the catalytic converter, as seen in the direction of flow, the device (24) having a source of these compounds, and means being provided, by means of which these compounds can be converted into a vapour phase, in such a manner that these compounds can be fed to the gas mixture in the vapour state, **characterized in that** urea in vapour form or reaction products of urea in the vapour state are fed to the gas mixture by a carrier gas.

10. Apparatus according to Claim 9, **characterized in that** the source for the compounds which release ammonia through catalytic hydrolysis contains these compounds in the solid state.

11. Apparatus according to claim 9 or 10, **characterized in that** the means for converting these compounds into the vapour phase is an intensive light source (20) having a beam outlet opening (21), and **in that** the beam outlet opening (21) is arranged at a distance from the solid source of these compounds.

12. Apparatus according to Claim 11, **characterized in that** the distance between the solid source of these compounds and the beam outlet opening (21) is adjustable.

13. Apparatus according to Claim 11, **characterized in that** the angle between the solid source of these compounds and the radiation outlet opening (21) is adjustable.

14. Apparatus according to Claim 11, **characterized in that** the beam outlet opening (21) is arranged substantially perpendicular to the solid source of these compounds.

15. Apparatus according to Claim 11, **characterized in that** the intensive light source (20) is a laser.

16. Apparatus according to Claim 9, **characterized in that** the device (24) has a chamber with an entry (17) and an exit (18), **in that** a carrier gas can be introduced into the chamber via the entry (17), which carrier gas mixes, in the chamber (24), with the compounds in vapour form which release ammonia through catalytic hydrolysis, and **in that** the mixture of carrier gas and the compounds in vapour form can be fed to the gas mixture via the exit (18).

17. Apparatus according to Claim 16, **characterized in that** a controllable valve (27) for introduction of the carrier gas is provided in the entry (17).

18. Apparatus according to Claim 16, **characterized in that** a further controllable valve (22), which can be used to adjust the supply of the compounds which release ammonia through catalytic hydrolysis and are in the vapour state into the gas mixture, is provided in the exit (18).

## Revendications

1. Procédé pour réduire les oxydes d'azote dans les mélanges gazeux, notamment dans les gaz d'échappement de moteurs à combustion interne selon lequel on introduit dans le mélange gazeux des composés qui libèrent de l'ammoniac par hydrolyse catalytique, les composés libérant ainsi de l'ammoniac par hydrolyse catalytique étant fournis à l'état de vapeur au mélange gazeux, **caractérisé en ce qu'** on fournit de l'urée à l'état de vapeur ou des produits de réaction de l'urée à l'état de vapeur par un gaz vecteur au mélange gazeux.

2. Procédé selon la revendication 1, **caractérisé en ce que** l'urée ou les produits de réaction de l'urée sont utilisés comme composés libérant de l'ammoniac par hydrolyse catalytique.

3. Procédé selon les revendications 1 et 2, **caractérisé en ce que** l'urée est vaporisée à partir de son état solide.

4. Procédé selon la revendication 3, **caractérisé en ce que** la vaporisation se fait à l'aide d'une source lumineuse intense.

5. Procédé selon les revendications 1 et 2, **caractérisé en ce que** l'urée ou les produits de réaction d'urée sont dosés à l'état de vapeur.

6. Procédé selon la revendication 5, **caractérisé en ce que** le dosage de l'urée à l'état de vapeur ou des produits de réaction de l'urée à l'état de vapeur se fait par la commande de la puissance de la source lumineuse intense en fonction du temps.

**7.** Procédé selon les revendications 1 et 2, **caractérisé en ce qu'** on fournit l'urée à l'état de vapeur ou les produits de réaction de l'urée à l'état de vapeur avec un gaz vecteur au mélange gazeux.

**8.** Procédé selon la revendication 7, **caractérisé en ce que** le gaz vecteur est de l'air atmosphérique ou le mélange gazeux lui-même ou une partie du mélange gazeux.

**9.** Dispositif pour réduire la teneur en oxyde d'azote dans les mélanges gazeux comprenant au moins un catalyseur (26, 30) placé entre l'entrée et la sortie du mélange gazeux, dans le sens de l'écoulement, ce catalyseur modifiant la composition chimique du mélange gazeux par une réaction catalytique ainsi qu'une installation (24) qui introduit en amont du catalyseur dans le mélange gazeux des composés qui libèrent de l'ammoniac par hydrolyse catalytique, l'installation (24) comportant une source pour fournir ses combinaisons et des moyens à l'aide desquels on fait passer les combinaisons en phase vapeur pour que ces combinaisons à l'état de vapeur puissent être fournies au mélange gazeux, **caractérisé en ce que** l'urée à l'état de vapeur ou les produits de réaction de l'urée à l'état de vapeur sont fournis au mélange gazeux par un gaz vecteur.

**10.** Dispositif selon la revendication 9, **caractérisé en ce que** la source des composés libérant de l'ammoniac par hydrolyse catalytique contient ces combinaisons à l'état solide.

**11.** Dispositif selon les revendications 9 ou 10, **caractérisé en ce que** des moyens pour faire passer ces composés en phase vapeur sont constitués par une source de lumière intense (20) avec un orifice de sortie de rayonnement (21) et cet orifice de sortie (21) est à une distance de la source solide de ces composés.

**12.** Dispositif selon la revendication 11, **caractérisé en ce que** la distance entre la source solide des composés et l'orifice de sortie du rayonnement (21) est réglable.

**13.** Dispositif selon la revendication 11, **caractérisé en ce que** l'angle entre la source solide des composés et l'orifice de sortie de rayonnement (21) est réglable.

**14.** Dispositif selon la revendication 11, **caractérisé en ce que** l'orifice de sortie de rayonnement (21) est essentiellement perpendiculaire à la source solide fournissant ces composés.

**15.** Dispositif selon la revendication 11, **caractérisé en ce que** la source de lumière intensive (20) est un laser.

**16.** Dispositif selon la revendication 9, **caractérisé en ce que** l'installation (24) comporte une chambre avec une entrée (17) et une sortie (18), un gaz vecteur étant fourni à la chambre par l'entrée (17), ce gaz se mélangeant dans la chambre (24) aux composés à l'état de vapeur libérant de l'ammoniac par hydrolyse catalytique, et le mélange formé du gaz vecteur et des composés à l'état de vapeur est fourni au mélange gazeux par la sortie (18).

**17.** Dispositif selon la revendication 16, **caractérisé en ce que** l'entrée (17) comporte une soupape réglable (27) pour introduire le gaz vecteur.

**18.** Dispositif selon la revendication 16, **caractérisé par** une autre soupape réglable (22) prévue dans la sortie (18) qui permet de régler l'alimentation à l'état de vapeur des composés libérant de l'ammoniac par hydrolyse catalytique au mélange gazeux.